# EUROPEAN PATENT SPECIFICATION

(11) **EP 3 547 141 B1**
(45) Date of publication and mention of the grant of the patent: **06.10.2021**
(21) Application number: 16922089.4
(22) Date of filing: 22.11.2016
(51) Int. Cl.: G06F 11/36

(54) **INFORMATION PROCESSING APPARATUS, INFORMATION PROCESSING METHOD, AND INFORMATION PROCESSING PROGRAM**
INFORMATIONSVERARBEITUNGSVORRICHTUNG, INFORMATIONSVERARBEITUNGSVERFAHREN UND INFORMATIONSVERARBEITUNGSPROGRAMM
DISPOSITIF, PROCÉDÉ ET PROGRAMME DE TRAITEMENT D'INFORMATIONS

(43) Date of publication of application: 02.10.2019
(73) Proprietor: Mitsubishi Electric Corporation, Chiyoda-ku Tokyo 100-8310 (JP)
(72) Inventor: HATAKEYAMA, Go, Tokyo 100-8310 (JP); KOITO, Yuhei, Tokyo 100-8310 (JP); IWABUCHI, Satoshi, Tokyo 100-8310 (JP); FUJII, Natsuko, Tokyo 100-8310 (JP); TAKAHASHI, Katsuhide, Tokyo 100-8310 (JP)
(74) Representative: Sajda, Wolf E.
(86) International application number: PCT/JP2016/084617
(87) International publication number: WO 2018/096588

(56) References cited:
- WO-A1-2011/010435
- WO-A1-2013/108730
- JP-A- H0 395 631
- JP-A- 2007 179 488
- JP-A- 2012 145 987
- US-A1- 2013 019 230

## Description

### Technical Field

The present invention relates to improvement of performance of a software program (hereinafter also referred to simply as software).

### Background Art

Problems may be found in the execution speed performance of software in the final phase of software development.

On a software development site, a common method is to measure the execution speed of software using a profiler, identify a bottleneck from a measurement result, and solve the identified bottleneck. However, this method cannot be performed unless the software is developed to a stage where the software can be executed.

Therefore, it is required to evaluate the execution speed performance of software at an earlier stage of development to reduce rework in the development.

Patent Literature 1 discloses a method in which static analysis is performed on a software program under development for which an execution environment has not yet been established, so as to predict the execution speed performance from the logic of the software program and automatically suggest improvement points.

Patent Literature 2 discloses a method in which the logic of a software program is separated as an arbitrary block and processing not affecting the output of this block is presented as a deletion candidate.

### List of Citations

### Patent Literature

Patent Literature 1: JP 2007-179488 A
Patent Literature 2: JP 2008-176639 A

International patent application publication WO 2013/108730 A aims to disclose a software verification support technology for achieving software which is provided with high safety and reusability and which is capable of suppressing program size. The software verification support device as laid out in the present invention, in a case in which a condition described by a conditional branch instruction is always satisfied, allows instructions executed when the condition is satisfied to remain within source code, thereupon deleting instructions which are executed when the condition is not satisfied from the source code.

Japanese patent application publication JP 2007-179488 A aims to provide a technique for predicting source code problems, capable of improving detection accuracy of the problems in software static analysis

Japanese patent application publication JP 2012-145987 A aims to solve a problem of a software development where a rework occurs frequently in a post process of a design process since a code writer executes performance optimization for performance-objective achievement after coding to give a priority to functional implementation using a method for indicating software performance problem comprises a background software running in background at the time of software development. The background software calculates execution time etc. of an inputted source code and warns when the calculated execution time exceeds a predetermined period (target time).

US patent application publication US 2013/0019230 A1 aims to disclose a program generating apparatus including a cross-compiling unit, a processing time calculating unit, a source code converting unit, and a self-compiling unit. The cross-compiling unit generates sin instruction string for each basic block based on a source code and specifies instructions performing a memory access. The processing time calculating unit calculates a processing time of the instruction string for each basic block. The source code converting unit inserts a first code, which adds the processing time of the basic block to an accumulated processing time variable of an executed thread of the basic block, and a second code, which calculates the processing time for the specified memory access and adds the calculated processing time to the accumulated processing time variable, into the source code.

### Summary of the Invention

### Technical Problem

With the technique of Patent Literature 1, it is possible to predict the execution speed performance of a software program by static analysis, and to predict a part to become a bottleneck. However, with the technique of Patent Literature 1, a specific method for solving the predicted bottleneck is not presented to a software developer.

For how to solve bottlenecks in software programs, there is little choice but to depend on ideas based on knowledge and experience of software developers even when using the profiler described above or when using the technique of Patent Literature 1.

Therefore, with the technique of Patent Literature 1, software developers need to spend a large amount of time on consideration for solving bottlenecks.

In the technique of Patent Literature 2, when a software program includes a description not necessarily required for executing a function required of the software program, deletion of this description is suggested to a software developer as a method for achieving improvement in the execution speed performance. That is, the technique of Patent Literature 2 is effective only when the software program includes a description not necessarily required for executing the function.

However, it is rare for software programs to include descriptions not necessarily required for functioning, in other words, inefficient descriptions that deteriorate the execution speed. Therefore, there are not many cases where the technique of Patent Literature 2 premised on existence of such inefficient descriptions can be used to effectively improve the execution speed in actual software program development.

It is a main object of the present invention, which is defined in detail in the appended independent claims, to present to a software developer a specific method for improving the execution speed performance without affecting an execution result.

### Solution to the Problem

An information processing apparatus according to the present invention includes:
a description extraction unit to analyze a source code in which a plurality of execution paths exist, and extract, on a per execution path basis, a description in the source code that does not affect an execution result even when the description is deleted, as a deletable description;
an effect calculation unit to calculate, on a per execution path basis, a speed performance improvement effect which is an effect of improving an execution speed of the source code in a case of deleting the deletable description from the source code; and
a rewrite example generation unit to generate a rewrite example of the source code which involves deletion of any deletable description from the source code, based on the speed performance improvement effect.

### Advantageous Effects of the Invention

In the present invention, a rewrite example of a source code which involves deletion of any deletable description from the source code is generated based on a speed performance improvement effect. Therefore, it is possible to present to a software developer a specific example of the software code which improves the execution speed performance without affecting an execution result.

### Brief Description of the Drawings

- FIG. 1: is a diagram illustrating an example of a functional configuration of an information processing apparatus according to a first embodiment;
- FIG. 2: is a flowchart illustrating an operation procedure of an input analysis unit according to the first embodiment;
- FIG. 3: is a flowchart illustrating an operation procedure of an output influence analysis unit according to the first embodiment;
- FIG. 4: is a diagram illustrating an example of a processing block according to the first embodiment;
- FIG. 5: is a diagram illustrating an example of a processing block after deleting deletable descriptions according to the first embodiment; FIG. 6 is a flowchart illustrating an operation procedure of a processing time estimation unit according to the first embodiment;
- FIG. 7: is a flowchart illustrating an operation procedure of an improvement effect estimation unit according to the first embodiment;
- FIG. 8: is a flowchart illustrating an operation procedure of a rewrite example generation unit according to the first embodiment; and
- FIG. 9: is a diagram illustrating an example of a hardware configuration of the information processing apparatus according to the first embodiment.

### Description of Embodiments

### First Embodiment

In this embodiment, an information processing apparatus will be described which can present to a software developer a specific example of a source code to improve the execution speed performance without affecting an execution result.

The information processing apparatus according to this embodiment will be described hereinafter with reference to the drawings. In the following description and the drawings of the embodiment, those with the same reference numeral indicate the same or corresponding part.

### Description of Configuration

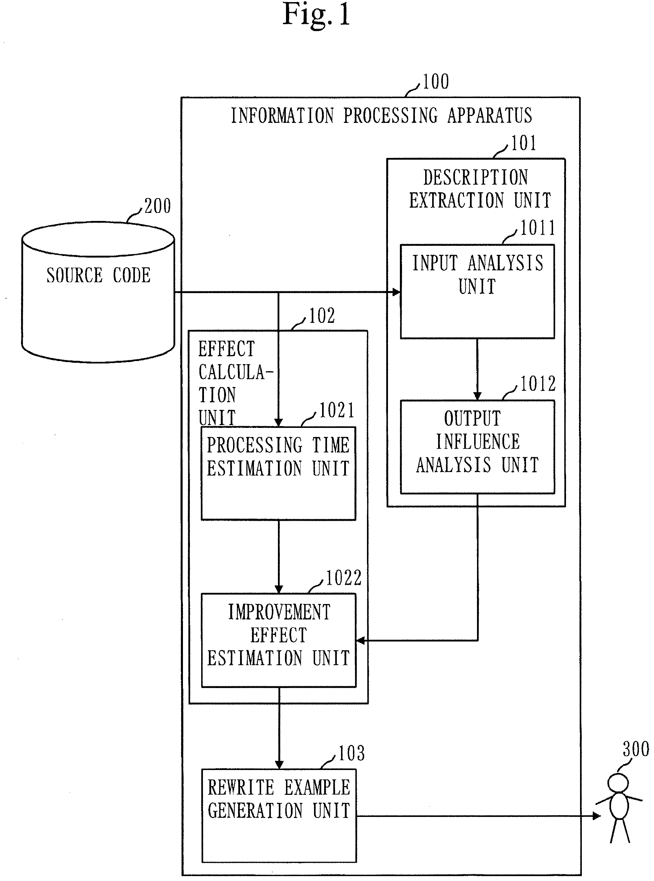

FIG. 1 illustrates an example of a functional configuration of an information processing apparatus 100 according to this embodiment.

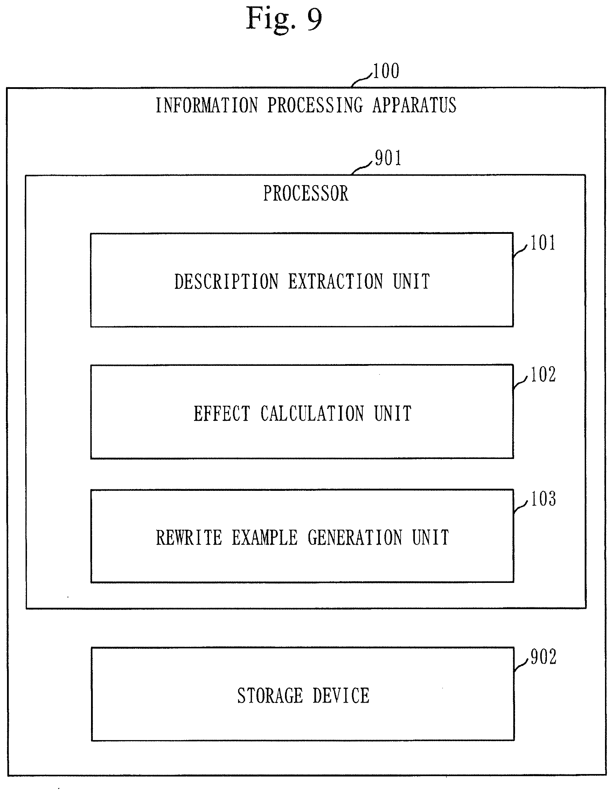

FIG. 9 illustrates an example of a hardware configuration of the information processing apparatus 100 according to this embodiment.

First, the hardware configuration of the information processing apparatus 100 will be described with reference to FIG. 9.

The information processing apparatus 100 according to this embodiment is a computer.

The information processing apparatus 100 has a processor 901 and a storage device 902 as hardware.

The information processing apparatus 100 has a description extraction unit 101, an effect calculation unit 102, and a rewrite example generation unit 103 as a functional configuration.

The storage device 902 stores programs for realizing functions of the description extraction unit 101, the effect calculation unit 102, and the rewrite example generation unit 103.

The processor 901 executes these programs to perform operation of the description extraction unit 101, the effect calculation unit 102, and the rewrite example generation unit 103 to be described later.

FIG. 9 schematically represents a state in which the processor 901 is executing the programs for realizing the functions of the description extraction unit 101, the effect calculation unit 102, and the rewrite example generation unit 103.

The operation performed by the information processing apparatus 100 corresponds to an information processing method and an information processing program.

The functional configuration of the information processing apparatus 100 will now be described with reference to FIG. 1.

As illustrated in FIG. 1, the information processing apparatus 100 is composed of the description extraction unit 101, the effect calculation unit 102, and the rewrite example generation unit 103 which are functional components.

The description extraction unit 101 obtains a source code 200 of a software program. A plurality of execution paths exist in the source code 200.

An execution path is a path traced when the source code 200 is executed. For example, a plurality of execution paths are formed by conditional branch processing or loop processing.

Then, the description extraction unit 101 statically analyzes the source code 200 and extracts, on a per execution path basis, a description in the source code 200 that does not affect an execution result even when it is deleted, as a deletable description.

More specifically, the description extraction unit 101 analyzes value ranges of variables included in the source code 200 and extracts a deletable description based on the analyzed value ranges of variables, on a per execution path basis.

The operation performed by the description extraction unit 101 corresponds to a description extraction process.

The description extraction unit 101 is composed of an input analysis unit 1011 and an output influence analysis unit 1012.

The input analysis unit 1011 analyzes the value ranges of variables included in the source code 200. The output influence analysis unit 1012 extracts a deletable description based on the value ranges of variables analyzed by the input analysis unit 1011.

The operation of the input analysis unit 1011 and the output influence analysis unit 1012 will be described in detail later.

The effect calculation unit 102 calculates, on a per execution path basis, a speed performance improvement effect which is an effect of improving the execution speed of the source code 200 in the case of deleting deletable descriptions from the source code 200.

More specifically, the effect calculation unit 102 calculates, on a per execution path basis, the effect of improving the execution speed of the source code 200 in the case of deleting deletable descriptions from the source code 200, as a first speed performance improvement effect. Further, the effect calculation unit 102 calculates, on a per deletable description basis, the effect of improving the execution speed of the source code 200 in the case of deleting a deletable description from the source code 200 in an execution path including the deletable description, as a second speed performance improvement effect.

The operation performed by the effect calculation unit 102 corresponds to an effect calculation process.

The effect calculation unit 102 is composed of a processing time estimation unit 1021 and an improvement effect estimation unit 1022.

The processing time estimation unit 1021 estimates a processing time for each piece of processing included in the source code 200. Processing is arithmetic processing included in the source code 200. The processing time is a time required for executing the processing.

The improvement effect estimation unit 1022 calculates the speed performance improvement effect based on a result of estimation of the processing time by the processing time estimation unit 1021.

The operation of the processing time estimation unit 1021 and the improvement effect estimation unit 1022 will be described in detail later.

The rewrite example generation unit 103 generates a rewrite example of the source code 200 which involves deletion of any of the deletable descriptions from the source code 200 based on the speed performance improvement effect calculated by the effect calculation unit 102.

More specifically, the rewrite example generation unit 103 generates a rewrite example of the source code 200 based on the first speed performance improvement effect and the second speed performance improvement effect calculated by the effect calculation unit 102.

The rewrite example generation unit 103 may generate a plurality of rewrite examples.

Then, the rewrite example generation unit 103 outputs the generated rewrite example of the source code 200. When generating a plurality of rewrite examples, the rewrite example generation unit 103 outputs the generated rewrite examples in descending order of the speed performance improvement effect. A software developer 300 can check the rewrite examples in descending order of the speed performance improvement effect.

The operation performed by the rewrite example generation unit 103 corresponds to a rewrite example generation process.

The operation of the rewrite example generation unit 103 will be described in detail later.

### Description of Operation

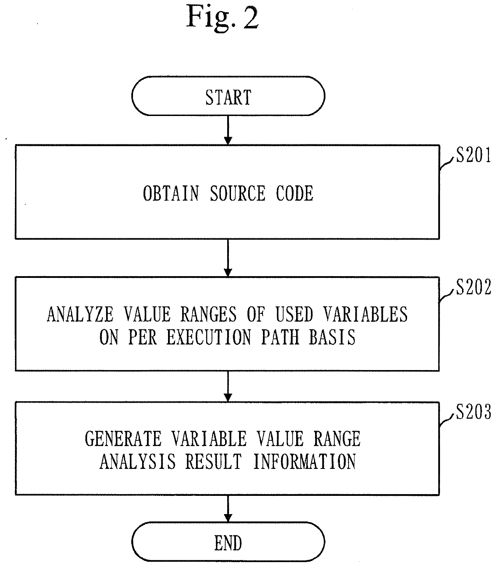

The operation of the input analysis unit 1011 according to this embodiment will now be described with reference to the flowchart of FIG. 2.

In step S201, the input analysis unit 1011 obtains the source code 200. Means to input the source code 200 is not particularly limited. The input analysis unit 1011 stores the obtained source code 200 in the storage device 902, for example.

In step S202, the input analysis unit 1011 statically analyzes the source code obtained in step S201, and the input analysis unit 1011 extracts a plurality of execution paths included in the source code 200. The input analysis unit 1011 may extract all execution paths included in the source code 200 or may extract only some execution paths matching a specific condition.

Then, the input analysis unit 1011 analyzes, on a per execution path basis, value ranges of variables used in an execution path based on conditional branch processing and arithmetic processing in the execution path.

In the execution path, the value range of a variable may change as processing proceeds. In such a case in which the value range of a variable changes, the input analysis unit 1011 analyzes which processing in the execution path is executed when the value range of the variable changes.

In step S203, the input analysis unit 1011 generates variable value range analysis result information indicating a result of analysis in step S202. Specifically, the variable value range analysis result information indicates, for each execution path, the value ranges of variables and points at which the value ranges change.

Then, the input analysis unit 1011 stores the generated variable value range analysis result information in the storage device 902. The input analysis unit 1011 may store the variable value range analysis result information in a storage medium other than the storage device 902.

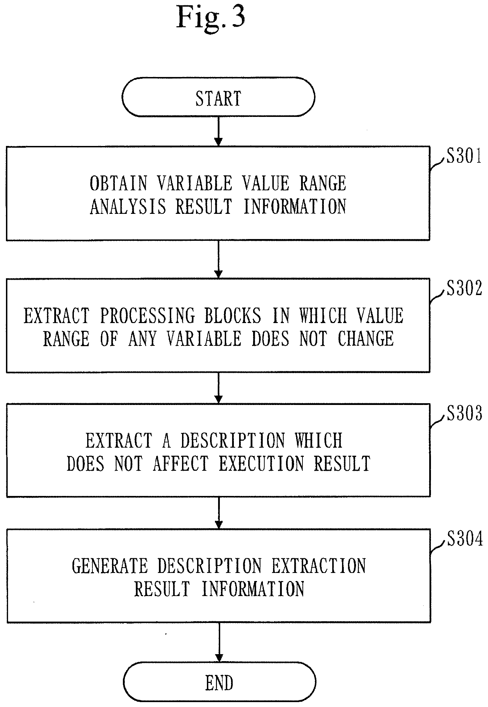

The operation of the output influence analysis unit 1012 according to this embodiment will now be described with reference to the flowchart of FIG. 3.

In step S301, the output influence analysis unit 1012 obtains the variable value range analysis result information generated in step S203. The output influence analysis unit 1012 reads the variable value range analysis result information from the storage device 902, for example.

In step S302, the output influence analysis unit 1012 extracts, for each execution path, a processing block in which the value range of any variable does not change based on the variable value range analysis result information. A processing block is a partial region in the source code 200.

In step S303, from the processing block in which the value range of any variable does not change extracted in step S302, the output influence analysis unit 1012 extracts a description that does not affect an output of the processing block if the value range of each variable is applied. The description extracted in step S303 is a deletable description.

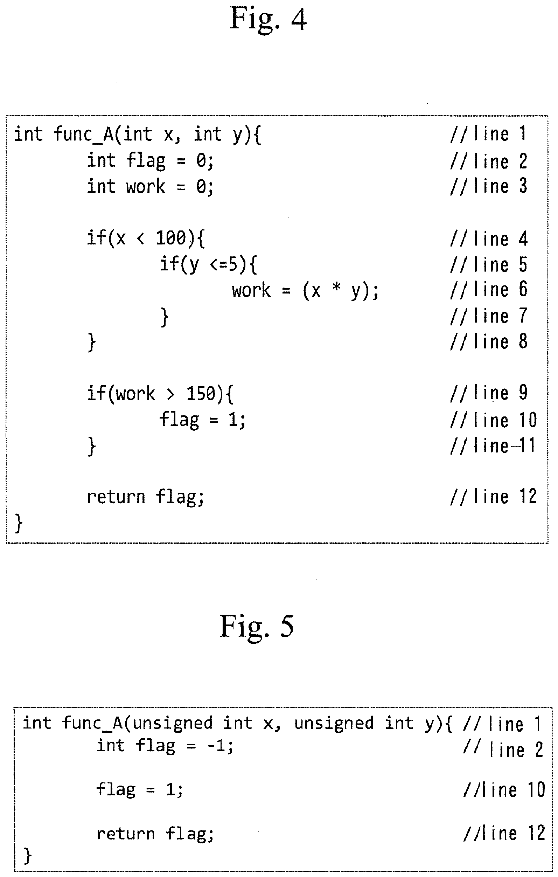

An example of extraction of a description that does not affect the output of the processing block will be described here using an example of the source code illustrated in FIG. 4.

FIG. 4 illustrates an example of a processing block in the source code written in C language which is a programming language.

It is assumed that a function call on line 1 of FIG. 4 is performed in a certain execution path in the source code.

If the variable value range analysis result information indicates that the value range of a variable x is from 0 to less than 100 at the time of performing the function call on line 1 of FIG. 4 in this execution path, the result of a conditional determination on line 4 is always true.

Therefore, even if descriptions on lines 4 to 8 are deleted, the execution result does not change in this execution path.

The processing time estimation unit 1021 extracts the descriptions on lines 4 to 8 as deletable descriptions for this execution path.

If the variable value range analysis result information indicates that the value range of the variable x is from 80 to 90 and the value range of a variable y is from 2 to 4 at the time of performing the function call on line 1 of FIG. 4 in another execution path, the results of conditional determinations on lines 4, 5 and 9 are always true.

Therefore, even if descriptions on lines 4, 5, and 9 are deleted, the execution result does not change in this execution path.

If the descriptions on line 4, 5 and 9 can be deleted, a description on line 6 can also be deleted.

The processing time estimation unit 1021 extracts the descriptions on lines 4, 5, 6, and 9 as deletable descriptions for this execution path.

Next, referring back to the flowchart of FIG. 3, in step S304 the output influence analysis unit 1012 generates description extraction result information indicating a result of extraction in step S303. Specifically, the description extraction result information indicates deletable descriptions for each execution path.

Then, the output influence analysis unit 1012 stores the generated description extraction result information in the storage device 902. The output influence analysis unit 1012 may store the description extraction result information in a storage medium other than the storage device 902.

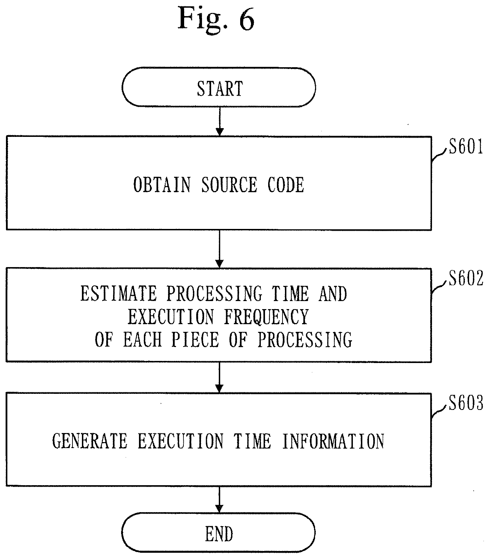

The operation of the processing time estimation unit 1021 according to this embodiment will now be described with reference to the flowchart of FIG. 6.

In step S601, the processing time estimation unit 1021 obtains the source code 200. Means to input the source code 200 is not particularly limited. The processing time estimation unit 1021 reads the source code 200 from the storage device 902, for example.

In step S602, the processing time estimation unit 1021 statically analyzes the source code 200, and estimates the processing time of each piece of processing and the execution frequency of each piece of processing in each execution path, for each piece of processing included in the source code 200.

As described above, processing is arithmetic processing included in the source code 200, and is arithmetic processing defined on each line of lines 1 to 6, 9, 10, and 12 in FIG. 4, for example.

The estimation of the processing time of each piece of processing and the estimation of the execution frequency of each piece of processing are realized, for example, by the procedures disclosed in Patent Literature 1. However, the processing time estimation unit 1021 may estimate the processing time of each piece of processing and estimate the execution frequency of each piece of processing by other procedures.

In step S603, the processing time estimation unit 1021 generates execution time information indicating a result of estimation in step S602. Specifically, the execution time information indicates the processing time of each piece of processing and also the execution frequency of each piece of processing for each execution path.

Then, the processing time estimation unit 1021 stores the generated execution time information in the storage device 902. The processing time estimation unit 1021 may store the execution time information in a storage medium other than the storage device 902.

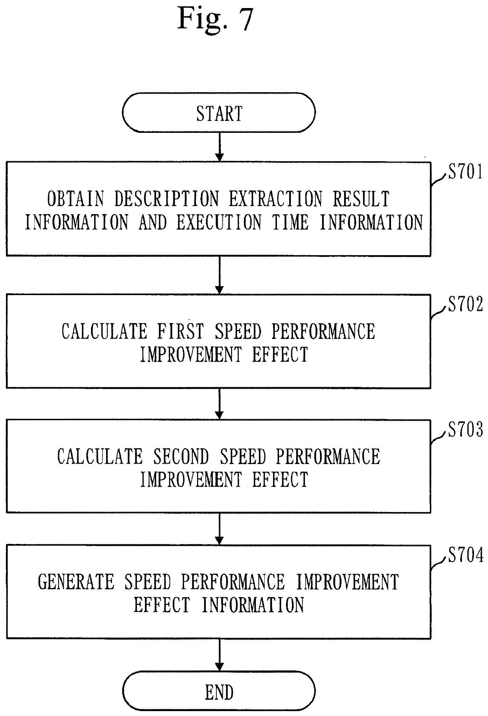

The operation of the improvement effect estimation unit 1022 according to this embodiment will now be described with reference to the flowchart of FIG. 7.

In step S701, the improvement effect estimation unit 1022 obtains the description extraction result information and the execution time information. The improvement effect estimation unit 1022 reads the description extraction result information and the execution time information from the storage device 902, for example.

In step S702, the improvement effect estimation unit 1022 calculates the first speed performance improvement effect. That is, the improvement effect estimation unit 1022 calculates, on a per execution path basis, the effect of improving the execution speed of the source code 200 in the case of deleting deletable descriptions from the source code 200 (first speed performance improvement effect).

More specifically, the improvement effect estimation unit 1022 obtains the deletable descriptions and the execution paths corresponding to the deletable descriptions from the description extraction result information. Next, the improvement effect estimation unit 1022 obtains the processing time and execution frequency of each piece of processing included in each execution path from the execution time information.

Then, the improvement effect estimation unit 1022 calculates, for each execution path, (processing time × execution frequency) of each piece of processing included in an individual execution path, and finds the sum of values of (processing time × execution frequency) of all pieces of processing included in the individual execution path (hereinafter referred to as a total time A).

The improvement effect estimation unit 1022 also calculates, for each execution path, (processing time × execution frequency) of each piece of processing corresponding to each deletable description included in an individual execution path, and finds the sum of values of (processing time × execution frequency) of all pieces of processing corresponding to the deletable descriptions (hereinafter referred to as a total time B).

Then, the improvement effect estimation unit 1022 calculates the first speed performance improvement effect using the total time A and the total time B. For example, the improvement effect estimation unit 1022 calculates the first speed performance improvement effect by (total time A - total time B) ÷ (total time A).

The improvement effect estimation unit 1022 repeats the above procedure for the plurality of execution paths to calculate the first speed performance improvement effect of the plurality of execution paths. That is, the improvement effect estimation unit 1022 calculates the first speed performance improvement effect in the case of deleting the pieces of processing corresponding to the deletable descriptions, for processing blocks which are included in each execution path and are separated at each point at which the value range of a variable changes.

In step S703, the improvement effect estimation unit 1022 calculates the second speed performance improvement effect. That is, the improvement effect estimation unit 1022 calculates, on a per deletable description basis, the effect of improving the execution speed of the source code 200 in the case of deleting a deletable description from the source code 200 in an execution path including the deletable description (second speed performance improvement effect).

More specifically, the improvement effect estimation unit 1022 calculates, for each deletable description, (processing time × execution frequency) of a piece of processing corresponding to an individual deletable description in each execution path including the individual deletable description, and finds the sum of values of (processing time × execution frequency) of all execution paths including the individual deletable description (hereinafter referred to as a total time C).

The improvement effect estimation unit 1022 also sums, for each deletable description, the total times A of all the execution paths including an individual deletable description (the time obtained by summing is hereinafter referred to as a total time D). Then, the improvement effect estimation unit 1022 calculates the second speed performance improvement effect using the total time C and the total time D. For example, the improvement effect estimation unit 1022 calculates the second speed performance improvement effect by (total time D - total time C) ÷ (total time D).

In step S704, the improvement effect estimation unit 1022 generates speed performance improvement effect information indicating the first speed performance improvement effect and the second speed performance improvement effect. The speed performance improvement effect information indicates the first speed performance improvement effect for each execution path and the second speed performance improvement effect for each deletable description.

Then, the improvement effect estimation unit 1022 stores the generated speed performance improvement effect information in the storage device 902. The improvement effect estimation unit 1022 may store the speed performance improvement effect information in a storage medium other than the storage device 902.

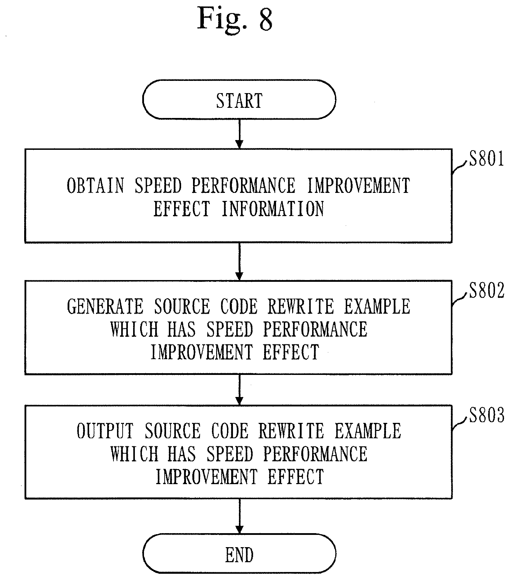

The operation of the rewrite example generation unit 103 according to this embodiment will now be described with reference to the flowchart of FIG. 8.

In step S801, the rewrite example generation unit 103 obtains the source code 200 and the speed performance improvement effect information. The rewrite example generation unit 103 reads the source code 200 and the speed performance improvement effect information from the storage device 902, for example.

In step S802, the rewrite example generation unit 103 generates a rewrite example of the source code 200 which involves deletion of any of the deletable descriptions based on the first speed performance improvement effect and the second speed performance improvement effect.

The rewrite example generation unit 103 generates, for example, a rewrite example of the source code 200 which maximizes the first speed performance improvement effect, a rewrite example of the source code 200 which maximizes the second speed performance improvement effect, and a rewrite example of the source code 200 which maximizes the sum of the first speed performance improvement effect and the second speed performance improvement effect.

In step S803, the rewrite example generation unit 103 outputs the rewrite examples of the source code 200 generated in step S802, and also outputs the execution path to be rewritten and the speed performance improvement effect for each rewrite example. The rewrite example generation unit 103 outputs the rewrite examples of the source code 200 in descending order of the speed performance improvement effect, for example. The output order of the rewrite examples of the source code 200 can be set arbitrarily.

FIG. 5 illustrates a rewrite example of the source code 200 to be presented to the software developer.

FIG. 5 is the rewrite example in which lines 3 to 9 and 11 are deleted from the processing block of FIG. 4. In the example of FIG. 5, it is possible to delete three pieces of conditional determination processing written on lines 4, 5 and 9 and one piece of integration processing and one piece of assignment processing written on line 6 of FIG. 4.

### Description of Effects of the Embodiment

According to this embodiment, a user (software developer) can obtain a specific source code rewrite plan for improving the execution speed performance of a software program without considering by the user itself the influence on the program due to a change in the source code. Therefore, the execution speed performance of the software program can be efficiently improved.

### List of Reference Signs

- 100: information processing apparatus
- 101: description extraction unit
- 102: effect calculation unit
- 103: rewrite example generation unit
- 1011: input analysis unit
- 1012: output influence analysis unit
- 1021: processing time estimation unit
- 1022: improvement effect estimation unit
- 200: source code
- 300: software developer
- 901: processor
- 902: storage device

## Claims

1. An information processing apparatus (100), comprising:
- a description extraction unit (101) configured to analyze a source code in which a plurality of execution paths exist, and to extract, on a per execution path basis, a description in the source code that does not affect an execution result even when the description is deleted, as a deletable description; **characterized by** an effect calculation unit (102) configured to calculate, on a per execution path basis, a speed performance improvement effect which is an effect of improving an execution speed of the source code in a case of deleting the deletable description from the source code; and
- a rewrite example generation unit (103) configured to generate a rewrite example of the source code which involves deletion of any deletable description from the source code, based on the speed performance improvement effect;
wherein the effect calculation unit (102) is configured to calculate, on a per execution path basis, the effect of improving the execution speed of the source code in the case of deleting the deletable description from the source code, as a first speed performance improvement effect, and also to calculate, on a per deletable description basis, an effect of improving the execution speed of the source code in a case of deleting the deletable description from the source code in an execution path including the deletable description, as a second speed performance improvement effect, and
wherein the rewrite example generation unit (103) is configured to generate the rewrite example of the source code based on the first speed performance improvement effect and the second speed performance improvement effect.

2. The information processing apparatus (100) according to claim 1,
wherein the rewrite example generation unit (103) is configured to output the generated rewrite example of the source code.

3. The information processing apparatus (100) according to claim 1,
wherein the rewrite example generation unit (103) is configured to generate a plurality of rewrite examples of the source code.

4. The information processing apparatus (100) according to claim 3,
wherein the rewrite example generation unit (103) is configured to output the generated plurality of rewrite examples of the source code in descending order of the speed performance improvement effect.

5. The information processing apparatus (100) according to claim 1,
wherein the description extraction unit (101) is configured to analyze a value range of a variable included in the source code and to extract the deletable description based on the analyzed value range of the variable, on a per execution path basis.

6. An information processing method comprising:
- analyzing a source code in which a plurality of execution paths exist, and extracting, on a per execution path basis, a description in the source code that does not affect an execution result even when the description is deleted, as a deletable description, by a computer;
**characterized by** calculating, on a per execution path basis, a speed performance improvement effect which is an effect of improving an execution speed of the source code in a case of deleting the deletable description from the source code, by the computer; and
- generating a rewrite example of the source code which involves deletion of any deletable description from the source code, based on the speed performance improvement effect, by the computer;
- calculating, on a per execution path basis, the effect of improving the execution speed of the source code in the case of deleting the deletable description from the source code, as a first speed performance improvement effect, and
- calculating, on a per deletable description basis, an effect of improving the execution speed of the source code in a case of deleting the deletable description from the source code in an execution path including the deletable description, as a second speed performance improvement effect; wherein generating the rewrite example of the source code is performed based on the first speed performance improvement effect and the second speed performance improvement effect.

7. An information processing program which, when executed on a computer, is configured to cause the computer to execute:
- a description extraction process to analyze a source code in which a plurality of execution paths exist, and extract, on a per execution path basis, a description in the source code that does not affect an execution result even when the description is deleted, as a deletable description;
**characterized by** causing the computer to execute an effect calculation process to calculate, on a per execution path basis, a speed performance improvement effect which is an effect of improving an execution speed of the source code in a case of deleting the deletable description from the source code; and
- a rewrite example generation process to generate a rewrite example of the source code which involves deletion of any deletable description from the source code, based on the speed performance improvement effect;
wherein the effect calculation process calculate, on a per execution path basis, the effect of improving the execution speed of the source code in the case of deleting the deletable description from the source code, as a first speed performance improvement effect, and also to calculate, on a per deletable description basis, an effect of improving the execution speed of the source code in a case of deleting the deletable description from the source code in an execution path including the deletable description, as a second speed performance improvement effect, and
wherein the rewrite example generation process generate the rewrite example of the source code based on the first speed performance improvement effect and the second speed performance improvement effect.

## Patentansprüche

1. Informationsverarbeitungsvorrichtung (100), die Folgendes aufweist:
- eine Beschreibungsextraktionseinheit (101), die dazu ausgebildet ist, einen Quellcode zu analysieren, der eine Vielzahl von Ausführungspfaden aufweist, und auf der Grundlage eines jeweiligen Ausführungspfads eine Beschreibung in dem Quellcode zu extrahieren, die ein Ausführungsergebnis nicht beeinflusst, selbst wenn die Beschreibung als löschbare Beschreibung gelöscht wird;
**gekennzeichnet durch**
eine Effektberechnungseinheit (102), die dazu ausgebildet ist, auf der Grundlage eines jeweiligen Ausführungspfades einen Geschwindigkeitsleistungs-Verbesserungseffekt zu berechnen, der ein Effekt der Verbesserung der Ausführungsgeschwindigkeit des Quellcodes in einem Fall des Löschens der löschbaren Beschreibung aus dem Quellcode ist; und
- eine Erzeugungs-Einheit (103) zum Erzeugen eines Umschreib-Beispiels, die dazu ausgebildet ist, basierend auf dem Geschwindigkeitsleistungs-Verbesserungseffekt, ein Umschreib-Beispiel des Quellcodes zu erzeugen, das das Löschen von löschbarer Beschreibung aus dem Quellcode beinhaltet;
wobei die Effektberechnungseinheit (102) dazu ausgebildet ist, auf der Grundlage eines jeweiligen Ausführungspfads den Effekt der Verbesserung der Ausführungsgeschwindigkeit des Quellcodes in dem Fall des Löschens der löschbaren Beschreibung aus dem Quellcode als einen ersten Geschwindigkeitsleistungs-Verbesserungseffekt zu berechnen, und ferner dazu ausgebildet ist, auf der Grundlage einer jeweils löschbaren Beschreibung einen Effekt der Verbesserung der Ausführungsgeschwindigkeit des Quellcodes in einem Fall des Löschens der löschbaren Beschreibung aus dem Quellcode in einem Ausführungspfad, der die löschbare Beschreibung enthält, als einen zweiten Geschwindigkeitsleistungs-Verbesserungseffekt zu berechnen, und
wobei die Erzeugungs-Einheit (103) zum Erzeugen eines Umschreib-Beispiels dazu ausgebildet ist, das Umschreib-Beispiel des Quellcodes auf der Grundlage des ersten Geschwindigkeitsleistungs-Verbesserungseffekts und des zweiten Geschwindigkeitsleistungs-Verbesserungseffekts zu erzeugen.

2. Informationsverarbeitungsvorrichtung (100) nach Anspruch 1,
wobei die Erzeugungs-Einheit (103) zum Erzeugen eines Umschreib-Beispiels dazu ausgebildet ist, das erzeugte Umschreib-Beispiel des Quellcodes auszugeben.

3. Informationsverarbeitungsvorrichtung (100) nach Anspruch 1,
wobei die Erzeugungs-Einheit (103) zum Erzeugen eines Umschreib-Beispiels dazu ausgebildet ist, eine Vielzahl von Umschreib-Beispielen des Quellcodes zu erzeugen.

4. Informationsverarbeitungsvorrichtung (100) nach Anspruch 3,
wobei die Erzeugungs-Einheit (103) zum Erzeugen eines Umschreib-Beispiels dazu ausgebildet ist, die erzeugte Vielzahl von Umschreib-Beispielen des Quellcodes in absteigender Reihenfolge des Geschwindigkeits-Verbesserungseffekts auszugeben.

5. Informationsverarbeitungsvorrichtung (100) nach Anspruch 1,
wobei die Beschreibungsextraktionseinheit (101) dazu ausgebildet ist, einen Wertebereich einer in dem Quellcode enthaltenen Variable zu analysieren und die löschbare Beschreibung auf der Grundlage des jeweiligen analysierten Wertebereichs der Variablen auf der Grundlage eines jeweiligen Ausführungspfads zu extrahieren.

6. Informationsverarbeitungsverfahren, das Folgende Schritte aufweist:
- Analysieren eines Quellcodes, in dem eine Vielzahl von Ausführungspfaden vorhanden ist, und Extrahieren einer Beschreibung in dem Quellcode auf der Grundlage eines jeweiligen Ausführungspfads, die ein Ausführungsergebnis nicht beeinflusst, selbst wenn die Beschreibung als löschbare Beschreibung durch einen Computer gelöscht wird;
**gekennzeichnet durch** Berechnen eines Geschwindigkeitsleistungs-Verbesserungseffekts auf der Grundlage eines jeweiligen Ausführungspfads, der ein Effekt der Verbesserung der Ausführungsgeschwindigkeit des Quellcodes in einem Fall des Löschens der löschbaren Beschreibung durch den Computer aus dem Quellcode ist; und
- Erzeugen eines Umschreib-Beispiels des Quellcodes, das das Löschen löschbarer Beschreibung aus dem Quellcode beinhaltet, basierend auf dem Geschwindigkeitsleistungs-Verbesserungseffekt durch den Computer;
- Berechnen des Effekts der Verbesserung der Ausführungsgeschwindigkeit des Quellcodes im Falle des Löschens der löschbaren Beschreibung aus dem Quellcode auf der Grundlage eines jeweiligen Ausführungspfads als einen ersten Geschwindigkeitsleistungs-Verbesserungseffekt, und
- Berechnen des Effekts der Verbesserung der Ausführungsgeschwindigkeit des Quellcodes in einem Fall des Löschens der löschbaren Beschreibung aus dem Quellcode in einem Ausführungspfad, der die löschbare Beschreibung enthält, als einen zweiten Geschwindigkeitsleistungs-Verbesserungseffekt auf der Grundlage löschbarer Beschreibung;
wobei das Erzeugen des Umschreib-Beispiels des Quellcodes auf der Grundlage des ersten Geschwindigkeitsleistungs-Verbesserungseffekts und des zweiten Geschwindigkeitsleistungs-Verbesserungseffekts durchgeführt wird.

7. Informationsverarbeitungsprogramm, das dann, wenn es auf einem Computer ausgeführt wird, konfiguriert ist, den Computer zu veranlassen, Folgendes durchzuführen:
- einen Beschreibungsextraktionsprozess, um einen Quellcode zu analysieren, in dem eine Vielzahl von Ausführungspfaden existiert, und auf der Grundlage eines jeweiligen Ausführungspfads eine Beschreibung in dem Quellcode zu extrahieren, die ein Ausführungsergebnis nicht beeinflusst, selbst wenn die Beschreibung als eine löschbare Beschreibung gelöscht wird;
**dadurch gekennzeichnet, dass** der Computer veranlasst wird, einen Effektberech nungsprozess auszuführen, um auf der Grundlage eines jeweiligen Ausführungs pfades einen Geschwindigkeitsleistungs-Verbesserungseffekt zu berechnen, der ein Effekt der Verbesserung einer Ausführungsgeschwindigkeit des Quellcodes in einem Fall des Löschens der löschbaren Beschreibung aus dem Quellcode ist; und
- einen Umschreib-Beispiel-Erzeugungsprozess, um ein Umschreib-Beispiel des Quellcodes zu erzeugen, das das Löschen löschbarer Beschreibung aus dem Quellcode beinhaltet, und zwar auf der Grundlage des Geschwindigkeits-Leistungsverbesserungseffekts;
wobei der Effektberechnungsprozess auf der Grundlage eines jeweiligen Ausführungspfads den Effekt der Verbesserung der Ausführungsgeschwindigkeit des Quellcodes in dem Fall des Löschens der löschbaren Beschreibung aus dem Quellcode als einen ersten Geschwindigkeitsleistungs-Verbesserungseffekt berechnet und ferner auf der Grundlage der jeweils löschbaren Beschreibung den Effekt der Verbesserung der Ausführungsgeschwindigkeit des Quellcodes in dem Fall des Löschens der löschbaren Beschreibung aus dem Quellcode in einem Ausführungspfad, der die löschbare Beschreibung enthält, als einen zweiten Geschwindigkeitsleistungs-Verbesserungseffekt berechnet, und
wobei der Umschreib-Beispiel-Erzeugungsprozess das Umschreib-Beispiel des Quellcodes basierend auf dem ersten Geschwindigkeits-Leistungsverbesserungseffekt und dem zweiten Geschwindigkeits-Leistungsverbesserungseffekt erzeugt.

## Revendications

1. Appareil de traitement d'information (100), comprenant :
- une unité d'extraction de description (101) configurée pour analyser un code source dans lequel il existe une pluralité de chemins d'exécution, et pour extraire, sur la base de chaque chemin d'exécution, une description dans le code source qui n'affecte pas un résultat d'exécution même quand la description est supprimée, à titre de description supprimable ; **caractérisé par** une unité de calcul d'effet (102) configurée pour calculer, sur la base de chaque chemin d'exécution, un effet d'amélioration de performance de vitesse qui est un effet permettant d'améliorer une vitesse d'exécution du code source dans un cas d'une suppression de la description supprimable du code source ; et
- une unité de génération d'exemple de réécriture (103) configurée pour générer un exemple de réécriture du code source qui implique la suppression de toute description supprimable du code source, sur la base de l'effet d'amélioration de performance de vitesse ;
dans lequel l'unité de calcul d'effet (102) est configurée pour calculer, sur la base de chaque chemin d'exécution, l'effet permettant d'améliorer la vitesse d'exécution du code source dans le cas d'une suppression de la description supprimable du code source, à titre de premier effet d'amélioration de performance de vitesse, et également pour calculer, sur la base de chaque description supprimable, un effet permettant d'améliorer la vitesse d'exécution du code source dans un cas d'une suppression de la description supprimable du code source dans un chemin d'exécution incluant la description supprimable, à titre de second effet d'amélioration de performance de vitesse, et
dans lequel l'unité de génération d'exemple de réécriture (103) est configurée pour générer l'exemple de réécriture du code source sur la base du premier effet d'amélioration de performance de vitesse et du second effet d'amélioration de performance de vitesse.

2. Appareil de traitement d'information (100) selon la revendication 1, dans lequel l'unité de génération d'exemple de réécriture (103) est configurée pour sortir l'exemple de réécriture généré du code source.

3. Appareil de traitement d'information (100) selon la revendication 1, dans lequel l'unité de génération d'exemple de réécriture (103) est configurée pour générer une pluralité d'exemples de réécriture du code source.

4. Appareil de traitement d'information (100) selon la revendication 3, dans lequel l'unité de génération d'exemple de réécriture (103) est configurée pour sortir la pluralité d'exemples de réécriture générés du code source dans un ordre décroissant de l'effet d'amélioration de performance de vitesse.

5. Appareil de traitement d'information (100) selon la revendication 1, dans lequel l'unité d'extraction de description (101) est configurée pour analyser une plage de valeurs d'une variable incluse dans le code source et pour extraire la description supprimable sur la base de la plage de valeurs analysée de la variable, sur la base de chaque chemin d'exécution.

6. Procédé de traitement d'information comprenant les étapes consistant à :
- analyser un code source dans lequel il existe une pluralité de chemins d'exécution, et extraire, sur la base de chaque chemin d'exécution, une description dans le code source qui n'affecte pas un résultat d'exécution même quand la description est supprimée, à titre de description supprimable, via un ordinateur ;
**caractérisé par** l'étape consistant à calculer, sur la base de chaque chemin d'exécution, un effet d'amélioration de performance de vitesse qui est un effet permettant d'améliorer une vitesse d'exécution du code source dans un cas de suppression de la description supprimable du code source, via l'ordinateur ; et
- générer un exemple de réécriture du code source qui implique la suppression de toute description supprimable du code source, sur la base de l'effet d'amélioration de performance de vitesse, via l'ordinateur ;
- calculer, sur la base de chaque chemin d'exécution, l'effet permettant d'améliorer la vitesse d'exécution du code source dans le cas d'une suppression de la description supprimable du code source, à titre de premier effet d'amélioration de performance de vitesse, et
- calculer, sur la base de chaque description supprimable, un effet permettant d'améliorer la vitesse d'exécution du code source dans un cas de suppression de la description supprimable du code source dans un chemin d'exécution incluant la description supprimable, à titre de second effet d'amélioration de performance de vitesse ;
dans lequel l'étape consistant à générer l'exemple de réécriture du code source est effectuée sur la base du premier effet d'amélioration de performance de vitesse et du second effet d'amélioration de performance de vitesse.

7. Programme de traitement d'information qui, quand il est exécuté sur un ordinateur, est configurée pour amener l'ordinateur à exécuter :
- un processus d'extraction de description pour analyser un code source dans lequel il existe une pluralité de chemins d'exécution, et pour extraire, sur la base de chaque chemin d'exécution, une description dans le code source qui n'affecte pas un résultat d'exécution même quand la description est supprimée, à titre de description supprimable ;
**caractérisé par** l'étape consistant à amener l'ordinateur à exécuter un processus de calcul d'effet pour calculer, sur la base de chaque chemin d'exécution, un effet d'amélioration de performance de vitesse qui est un effet permettant d'améliorer une vitesse d'exécution du code source dans un cas de suppression de la description supprimable du code ; et
- un processus de génération d'un exemple de réécriture pour générer un exemple de réécriture du code source qui implique la suppression de toute description supprimable du code source qui implique la suppression de toute description supprimable du code source, sur la base de l'effet d'amélioration de performance de vitesse ;
dans lequel le processus de calcul d'effet calcule, sur la base de chaque chemin d'exécution, l'effet permettant d'améliorer la vitesse d'exécution du code source dans le cas d'une suppression de la description supprimable du code source, à titre de premier effet d'amélioration de performance de vitesse, et également calcule, sur la base de chaque description supprimable, un effet permettant d'améliorer la vitesse d'exécution du code source dans un cas de suppression de la description supprimable du code source dans un chemin d'exécution incluant la description supprimable, à titre de second effet d'amélioration de performance de vitesse, et
dans lequel le processus de génération d'exemple de réécriture génère l'exemple de réécriture du code source sur la base du premier effet d'amélioration de performance de vitesse et du second effet d'amélioration de performance de vitesse.
